# EUROPÄISCHE PATENTANMELDUNG

(11) **EP 3 536 993 A1**
(43) Veröffentlichungstag der Anmeldung: **11.09.2019**
(21) Anmeldenummer: 18159966.3
(22) Anmeldetag: 05.03.2018
(51) Int. Cl.: F16C 17/10, F16C 33/10, F16H 57/08, F16H 57/04, F03D 80/70

(54) **GLEITLAGERSYSTEM, PLANETENGETRIEBE, WINDKRAFTANLAGE UND INDUSTRIEANWENDUNG**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft ein Gleitlagersystem (10), das ein Planetenrad (12) umfasst, das drehbar auf einer Planetenradachse (14) aufgenommen ist. An der Planetenradachse (14) ist eine Radialgleitlagerbuchse (20) angeordnet. Erfindungsgemäß ist zwischen der Radialgleitlagerbuchse (20) und dem Planetenrad (12) eine Schmierfläche (22) ausgebildet, die eine geringere axiale Länge (23) aufweist als das Planetenrad (12). Die Erfindung betrifft auch ein Planetengetriebe, das mit einem entsprechenden Gleitlagersystem (10) ausgestattet ist. Ebenso betrifft die Erfindung eine Windkraftanlage und eine Industrieanwendung, die mit einem entsprechenden Planetengetriebe versehen sind.

## Beschreibung

Die Erfindung betrifft ein Gleitlagersystem und ein Planetengetriebe, das über ein entsprechendes Gleitlagersystem verfügt. Die Erfindung betrifft auch eine Windkraftanlage, die mit einem solchen Planetengetriebe ausgestattet ist.

Aus EP 2 383 480 A1 ist ein Planetengetriebe für eine Windkraftanlage bekannt, das ein Planetenrad umfasst, das auf eine Planetenradachse drehbar gelagert ist. Das Planetenrad ist auch einer Hülse angeordnet, die an ihrer Außenfläche Schmiertaschen aufweist. Die Hülse bildet so mit dem Planetenrad ein Radialgleitlager. An axialen Enden der Hülse wird ein Austritt von Schmierstoff in einen Ringkanal durch Staukanten begrenzt, die an das Planetenrad angeformt sind. Weiter axial außerhalb der Staukanten sind Axialscheiben angeordnet.

DE 27 02 321 A1 offenbart eine Lagerung eines rotierenden Teils auf einem Bolzen, das als Planetenrad auf einem Planetenradbolzen ausgebildet ist. Zwischen dem Planetenradbolzen und dem Planetenrad ist eine Stahlbüchse angeordnet, die in einer Axialrichtung kürzer ist als das Planetenrad. Die Stahlbüchse ist im Planetenrad aufgenommen, so dass bei Rotation ein Schmierstoff durch Nuten im Planetenradbolzen gefördert wird. Der Schmierstoff bildet dabei zwischen der Stahlbüchse und dem Planetenradbolzen ein Schmierstofffilm aus. Axial außerhalb der Stahlbüchse sind Anlaufscheiben angeordnet.

Aus US 2015/0369284 A1 ist en Gleitlager für ein Planetenrad bekannt, das auf einem Tragelement angeordnet ist. Das Tragelement in einem radial inneren Bereich mit einer Radiallagerbuchse versehen. Zwischen der Radiallagerbuchse und einer Planetenradachse wird mit einem Schmierstoff, der durch eine Bohrung im Planetenrad gefördert wird, ein Schmierstofffilm ausgebildet. Das Tragelement ist an seinen Axialenden jeweils mit einer Axiallagerscheibe ausgestattet, die mit einem benachbarten Druckkamm einen Schmierspalt ausbilden.

Es besteht Bedarf an einem Gleitlagersystem, das in einer Radialrichtung und einer Axialrichtung eine leistungsfähige Lagerung mit einer zuverlässigen Schmierstoffversorgung bietet. Gleichzeitig wird angestrebt, ein solches Gleitlagersystem einfach und wartungsarm auszubilden und kosteneffizient herzustellen. Der Erfindung liegt die Aufgabe zugrunde, ein Gleitlagersystem bereitzustellen, das in zumindest einem der beschriebenen Aspekte eine Verbesserung bietet.

Die Aufgabenstellung wird durch das erfindungsgemäße Gleitlagersystem gelöst, das dazu dient, ein Planetenrad für den Betrieb eines Planetengetriebes drehbar zu lagern. Das Gleitlagersystem umfasst das Planetenrad, das auf einer Planetenradachse drehbar aufgenommen ist. Zwischen dem Planetenrad und der Planetenradachse ist eine Radialgleitlagerbuchse angeordnet, die hydraulisch mit einer Schmierstoffzufuhr verbunden ist. Zwischen der Radialgleitlagerbuchse und dem Planetenrad ist eine im Wesentlichen zylindermantelförmige Schmierfläche ausgebildet, entlang der ein Schmierstoff gefördert wird. Der Schmierstoff zwischen der Planetenradachse und dem Planetenrad gewährleistet eine Gleitlagerung des Planetenrads, das somit drehbar gelagert ist. Hierdurch bei entsprechend schneller Drehung des Planetenrads an der Schmierfläche eine hydrodynamische Gleitlagerung erzielbar. Erfindungsgemäß weist die Schmierfläche eine axiale Länge auf, die geringer ist als die axiale Länge des Planetenrads. Infolgedessen wird entlang einer Drehachse des Planetenrads die Radialgleitlagerbuchse an zumindest einem Ende vom Planetenrad überragt. Dadurch wird an zumindest einem Ende der Radialgleitlagerbuchse ein vergrößerter Schmierstoffraum bereitgestellt. Im Schmierstoffraum befindet sich im bestimmungsgemäßen Betrieb des Gleitlagersystems Schmierstoff, der für eine weitere Benutzung weiterleitbar im Schmierstoffraum aufgenommen ist.

Somit ist beispielsweise Schmierstoff zur Schmierfläche zurückleitbar, und somit ein divergenter Schmierspalt mit Schmierstoff versorgbar. Ein Vorsehen zusätzlicher Schmiertaschen an der Radialgleitlagerbuchse und/oder eine Erhöhung eines Förderdrucks für den Schmierstoff zur Verbesserung der Schmierstoffversorgung im divergenten Schmierspalt sind damit entbehrlich. Ebenso kann einer Axialgleitlagerscheibe Schmierstoff über den Schmierstoffraum zugeführt werden. Dadurch wird eine Schmierstoffversorgung mit verringerten Schmierstoffverlusten bereitgestellt, die in einfacher und kosteneffizienter Weise herstellbar ist.

In einer Ausführungsform des beanspruchten Gleitlagersystems umfasst dieses zumindest eine Axialgleitlagerscheibe, die auf der Planetenradachse angeordnet ist. Die Axialgleitlagerscheibe ist dazu ausgebildet, als Anlaufscheibe zu dienen. Schmierstoff, der aus der Schmierfläche zwischen dem Planetenrad und der Radialgleitlagerbuchse austritt, wird über den vergrößerten Schmierstoffraum zur Axialgleitlagerscheibe geführt. Hierdurch ist bei entsprechend schneller Drehung des Planetenrads auch in Axialrichtung eine hydrodynamische Gleitlagerung erzielbar. Dadurch wird zusätzlich zur radialen Gleitlagerung an der Schmierfläche zwischen dem Planetenrad und der Radialgleitlagerbuchse auch eine axiale Gleitlagerung des Planetenrads erzielt.

Des Weiteren kann die Axialgleitlagerscheibe an einer axial innenliegenden Stirnseite eine Schmierstoffnut aufweisen. Die Schmierstoffnut in der Axialgleitlagerscheibe ist zum Schmierstoffraum hin offen ausgebildet und ist dadurch mit dem Schmierstoffraum hydraulisch verbunden. Der Schmierstoffraum ist dabei im Bereich der Radialgleitlagerbuchse ausgebildet. Beispielsweise kann der Schmierstoffraum sind in einem Bereich erstrecken, der an einem Ende der Radialgleitlagerbuchse, und damit an einer Begrenzung der Schmierfläche zwischen dem Planetenrad und der Radialgleitlagerbuchse liegt. Der durch einen Austritt von Schmierstoff aus der Schmierfläche an der Radialgleitlagerbuchse hervorgerufene hydraulische Druck wird so auf den Schmierstoffraum und die Schmierstoffnut in der Axialgleitlagerscheibe übertragen. Dadurch wird in Umfangsrichtung durch die Schmierstoffnut eine Schmierstoffversorgung gewährleistet. Des Weiteren wird durch den vorhandenen hydraulischen Druck die Axialgleitlagerscheibe axial nach außen gedrückt. Beispielsweise ist Schmierstoff in einen divergenten Schmierspalt an der Radialgleitlagerbuchse leitbar. Darüber hinaus dient der Schmierstoffraum als Vorrat an Schmierstoff, der bei einem Ausfall einer Schmierstoffpumpe und/oder bei einem Abschaltbetrieb zur Schmierstoffversorgung des Gleitlagersystems nutzbar ist. Unter einem Abschaltbetrieb ist dabei eine gezielte Reduzierung einer Drehgeschwindigkeit des Planetenrads auf im Wesentlichen Null zu verstehen.

Darüber hinaus kann das Planetenrad im Bereich seiner Nabe eine axiale Ausnehmung aufweisen, die zur Umlenkung des Schmierstoffs ausgebildet ist. Eine solche axiale Ausnehmung kann dabei beispielsweise als Stufe ausgebildet sein, durch deren Abmessungen, insbesondere deren axiale Länge, die Größe des Schmierstoffraums entlang der Axialrichtung definiert ist. Die Umlenkung des Schmierstoffs erfolgt dabei von einem ersten Schmierstoffspalt zu einem zweiten Schmierstoffspalt. Der erste Schmierstoffspalt ist der im Betrieb mit Schmierstoff gefüllte Bereich an der Schmierfläche zwischen dem Planetenrad und der Radialgleitlagerbuchse. Der erste Schmierspalt erstreckt sich im Wesentlichen in Axialrichtung. Der zweite Schmierspalt befindet sich zwischen der axial innenliegenden Stirnseite der Axialgleitlagerscheibe und einer Stirnfläche des Planetenrads. Durch die axiale Ausnehmung wird im Bereich der Nabe des Planetenrads ein Raum definiert, durch den zumindest teilweise eine Strömung von Schmierstoff verläuft, die vom ersten zum zweiten Schmierstoffspalt verläuft. Die durch die axiale Ausnehmung definierten Flächen an der Nabe des Planetenrads werden im Betrieb gedreht. Durch die Drehung wirken Fliehkräfte auf den dort befindlichen Schmierstoff, der so in Umfangsrichtung gefördert wird. Je höher die axiale Länge des axialen Ausnehmung, umso größer ist eine Innenfläche an der Nabe des Planetenrads, entlang der Schmierstoff gefördert wird. Je höher die radiale Abmessung der axialen Ausnehmung, umso höher ist an der entsprechenden Innenfläche an der Nabe des Planetenrads die auftretende Drehgeschwindigkeit, und somit die auf den Schmierstoff einwirkende Fliehkraft. Durch die Dimensionierung der axialen Ausnehmung sind die hydraulischen bzw. hydrodynamischen Eigenschaften einer solchen Strömung beeinflusst.

In einer weiteren Ausführungsform des beanspruchten Gleitlagersystems weist die axiale Ausnehmung, die Radialgleitlagerbuche und/oder die Axialgleitlagerscheibe zumindest eine Verrundung auf. Die Verrundungen können dabei im Bereich des ersten und/oder zweiten Schmierspalts ausgebildet sein. Der Radius einer solchen Verrundung ist dahingehend gewählt, dass eine stetige Umlenkung des Schmierstoffs vom ersten zum zweiten Schmierspalt gewährleistet ist. Dadurch wird ein Druckverlust des Schmierstoffs bei der Umlenkung reduziert. Insbesondere können durch gegenüberliegende Verrundungen am Planetenrad und an der Radialgleitlagerbuche und/oder der Axial-Radialgleitlagerbuchse hydrodynamisch ein verbesserter Auslauf bzw. Einlauf bereitgestellt werden. Ein entsprechend ausgebildeter Einlauf bzw. Auslauf ist frei von so genannten Abrisskanten, an denen ein Umschlag von einer laminaren in eine turbulente Strömung des Schmierstoffs eintreten kann. Ein solcher Umschlag von laminarer in turbulente Strömung ist mit einem erheblichen Druckverlust verbunden. Damit wird durch die Verrundungen ein für die durchgängige Schmierstoffversorgung des Gleitlagersystems notwendiger hydraulischer Druck ohne zusätzliche Hilfsmittel aufrechterhalten. Ferner kann eine Verrundung auch an einem axial inneren und radial äußeren Bereich der axialen Ausnehmung an der Nabe des Planetenrads ausgebildet sein.

Darüber hinaus kann die Verrundung, die am Planetenrad im axial inneren und radial äußeren Bereich der axialen Ausnehmung ausgebildet ist, dazu dienen, einen Massenstrom an Schmierstoff einzustellen, der dem zweiten Schmierstoffspalt zugeführt wird. Durch die Wahl eines entsprechenden Radius dieser Verrundung wird beeinflusst, welcher Anteil des Schmierstoffs, der in den Schmierstoffraum eintritt, dem zweiten Schmierstoffspalt zugeführt wird. Daraus resultiert wiederum, welcher Anteil, also Massenstrom, an Schmierstoff den divergenten Schmierspalt zwischen der Planetenradachse und der Radialgleitlagerbuchse, zugeführt wird. Je größer der Radius der Verrundung im axial inneren und radial äußeren Bereich der axialen Ausnehmung ist, umso höher ist der Massenstrom an Schmierstoff, der zum zweiten Schmierstoffspalt zwischen dem Planetenrad und der Axialgleitlagerscheibe geht. Dadurch besteht eine einfache konstruktive Möglichkeit, das beanspruchte Gleitlagersystem für Anwendungen mit unterschiedlichen Anforderungen in puncto Schmierstoffversorgung anzupassen. Folglich weist das beanspruchte Gleitlagersystem ein breites Einsatzspektrum auf.

Darüber hinaus kann die Schmierstoffnut, die an der axial innenliegenden Stirnseite der Axialgleitlagerscheibe ausgebildet ist, als Beruhigungsraum für Schmierstoff ausgebildet ist, der im Schmierstoffraum gefördert wird. Die Axialgleitlagerscheibe ist beispielsweise durch eine Verdrehsicherung während des Betriebs in Umfangsrichtung im Wesentlichen stationär. Infolgedessen wird an keiner Fläche der Schmierstoffnut Schmierstoff in Umfangsrichtung gefördert. Dadurch wird mittels der Schmierstoffnut in Umfangsrichtung ein Druckausgleich im Schmierstoff hervorgerufen. Da die Schmierstoffnut als Beruhigungsraum ausgebildet ist, bei dem die Axialgleitlagerscheibe in Umfangsrichtung im Wesentlichen stationär ist, wird eine Saugwirkung auf den Schmierstoff unterbunden. Eine solche Saugwirkung, die beispielsweise bei einer drehenden Axialgleitlagerscheibe hervorgerufen werden kann, kann im Bereich eines divergenten Schmierspalts an der Radialgleitlagerbuche eine Unterversorgung mit Schmierstoff hervorrufen. Durch die beanspruchte Lösung wird die Förderung des Schmierstoffs in Umfangsrichtung verbessert und so eine zuverlässigere Versorgung des divergenten Schmierspalts an der Radialgleitlagerbuche mit Schmierstoff gewährleistet werden.

Ferner kann im beanspruchten Gleitlagersystem der Schmierstoffraum einen radial innenliegenden Teilraum umfassen, der zur Versorgung des divergenten Schmierspalts an der Radialgleitlagerbuchse vorgesehen ist. Unter einem divergenten Schmierspalt ist hierbei ein Abschnitt der Schmierfläche zwischen dem Planetenrad und der Radialgleitlagerbuche zu verstehen. Der divergente Schmierspalt liegt entlang der Umfangsrichtung hinter einer engsten Stelle der Schmierfläche. Der radial innenliegende Teilraum des Schmierstoffraums wird dabei zumindest teilweise von der Planetenradachse, der Radialgleitlagerbuchse und der Axial-Radialgleitlagerbuchse begrenzt. Der radial innenliegende Teilraum geht ferner in einen radial außenliegenden Teilraum über, der auch zum Schmierstoffraum gehört. Schmierstoff, der sich im radial innenliegenden Teilraum befindet, ist im Wesentlichen Beschleunigungen unterworfen, die durch die Zähigkeit des Schmierstoffs vom radial außenliegenden Teilraum zum radial innenliegenden Teilraum übertragen werden. Diese Beschleunigungen in Umfangsrichtung sind jedoch gering. Damit ist der Schmierstoff im radial innenliegende Teilraum reduzierten Beschleunigungen unterworfen, und stellt dadurch eine verbesserte Versorgung des divergenten Schmierspalts mit Schmierstoff sicher.

In einer weiteren Ausführungsform des beanspruchten Gleitlagersystems ist die Axialgleitlagerscheibe schwimmend auf der Planetenradachse angeordnet. Eine axiale Lage der Axialgleitlagerscheibe ist somit durch einen Druck, der vom Schmierstoff auf die Axialgleitlagerscheibe ausgeübt wird, einstellbar. In einem Dauerbetriebszustand wird die Axialgleitlagerscheibe an eine erste oder zweite Wange angedrückt, die zum Planetenradträger gehört. Die Axialgleitlagerscheibe erfordert damit keine konstruktive Anpassung um eine axiale Befestigung zu erzielen und ist somit in einfacher und kosteneffizienter Weise herstellbar.

Ferner kann im Gleitlagersystem in der Planetenradachse zumindest ein Schmierstoffkanal ausgebildet sein, der zu einer Versorgung der Schmierfläche mit Schmierstoff dient. Der Schmierstoffkanal ist zumindest teilweise als Ausnehmung innerhalb der Planetenradachse ausgebildet und ist beispielsweise durch Bohren herstellbar. Ein derartiger Schmierstoffkanal erlaubt eine einfache und zuverlässige Anbindung an eine Schmierstoffpumpe, die einem Planetengetriebe zugeordnet ist, das über ein entsprechendes Gleitlagersystem verfügt.

Des Weiteren kann die Planetenradachse im beanspruchten Gleitlagersystem drehfest in einem Planetenträger aufgenommen sein. Eine drehfeste Aufnahme der Planetenradachse im Planetenträger gewährleistet eine einfache und umlenkungsfreie Kopplung mit der Schmierstoffpumpe. Insbesondere kann so der Schmierstoffkanal flexibel in der Planetenradachse positioniert sein und gleichzeitig stets eine präzise hydraulische Verbindung für die Weiterleitung von Schmierstoff von einem Schmierstoffkanal im Planetenträger in einen Schmierstoffkanal in der Planetenradachse gewährleistet werden. Dadurch ist die beschriebene Lösung in einfacher Weise in ein Gleitlagersystem eines Planetengetriebes integrierbar.

Die skizzierte Aufgabenstellung wird auch durch ein erfindungsgemäßes Planetengetriebe gelöst. Das Planetengetriebe weist zumindest eine Planetenstufe auf, die einen Planetenträger umfasst, der eine Mehrzahl an Planetenrädern aufweist, die drehbar im Planetenträger aufgenommen sind. Die Planetenräder sind in einem Hohlrad angeordnet, mit dem sie über die jeweiligen Verzahnungen im Eingriff stehen. Das Hohlrad ist dabei stationär, also nicht drehbar, ausgebildet. Das Planetengetriebe weist auch eine Sonnenwelle auf, die, bezogen auf die Planetenräder, im Wesentlichen mittig aufgenommen ist und um eine Hauptachse drehbar ausgebildet ist. Der Planetenträger ist auch drehbar ausgebildet, so dass die Planetenräder im bestimmungsgemäßen Betrieb auch um die Hauptdrehachse, also die Sonnenwelle, rotieren. Die Planetenräder stehen mit ihren Verzahnungen auch im Eingriff mit der Sonnenwelle und sind somit dieser gekoppelt. Erfindungsgemäß ist zumindest eines der Planetenräder einem Gleitlagersystem gemäß zumindest einer der oben beschriebenen Ausführungsformen zugeordnet. Somit ist das Planetenrad mittels des skizzierten Gleitlagersystems drehbar im Planetenträger gelagert. Ein solches Planetengetriebe weist eine insgesamt in puncto Zuverlässigkeit und Lebensdauer verbesserte Lagerung der Planetenräder auf. Ferner wird durch die Verwendung des erfindungsgemäßen Gleitlagersystems in einem entsprechenden Planetengetriebe dessen Herstellung vereinfacht und kosteneffizienter gestaltet.

Ebenso wird die beschriebene Aufgabenstellung durch einen erfindungsgemäßen Antriebsstrang für eine Windenergieanlage gelöst. Der Antriebsstrang umfasst eine Rotorhauptwelle, die eine drehmomentübertragende Verbindung mit einem Rotor der Windenergieanlage gewährleistet. Die Rotorhauptwelle ist auch mit einem Planetengetriebe drehmomentübertragen verbunden, so dass eine vom Rotor bereitgestellte Antriebsleistung ins Planetengetriebe eingeleitet wird. Ferner ist das Planetengetriebe drehmomentübertragend mit einem Generator verbunden, der dazu ausgebildet ist, die so erhaltene Antriebsleistung in Elektrizität umzuwandeln. Erfindungsgemäß ist das Planetengetriebe gemäß einer der oben dargestellten Ausführungsformen ausgebildet.

Des Weiteren wird die eingangs skizzierte Aufgabenstellung auch durch eine erfindungsgemäße Windenergieanlage gelöst. Die Windenergieanlage weist einen Rotor auf, der drehbar an einer Gondel angebracht ist. Zur Erzeugung von Elektrizität mit einem Antriebsstrang ausgestattet, der gemäß einer oben beschriebenen Ausführungsformen ausgebildet ist.

Darüber hinaus wird die der Erfindung zugrundeliegende Aufgabenstellung durch eine entsprechende Industrieanwendung gelöst. Eine solche Industrieanwendung umfasst eine mechanische Anwendung und einen Antriebsmotor. Der mechanischen Anwendung wird über den Antriebsmotor die erforderliche Antriebsleistung bereitgestellt. Die mechanische Anwendung und der Antriebsmotor sind über ein Planetengetriebe drehmomentübertragen miteinander verbunden. Das Planetengetriebe ist dabei gemäß einer der oben skizzierten Ausführungsformen ausgebildet. Die Industrieanwendung ist beispielsweise als Mühle, Vertikalmühle, Extruder, Gesteinsbrecher oder Förderanlage ausgebildet.

Die Erfindung wird im Folgenden anhand einzelner Ausführungsformen beschrieben. Die Merkmale der einzelnen Ausführungsformen sind dabei untereinander kombinierbar und die Figuren sind entsprechend in gegenseitiger Ergänzung aufzufassen. Insbesondere haben gleiche Bezugszeichen in unterschiedlichen Figuren auch korrespondierend die gleiche technische Bedeutung. Es zeigt im Einzelnen:
- FIG 1: eine Ausführungsform des beanspruchten Gleitlagersystems in einer Schnittdarstellung;
- FIG 2: eine Detailansicht der Gleitlagersystems nach FIG 1 in einer Schnittdarstellung;
- FIG 3: eine Ausführungsform des Gleitlagersystems in einem Querschnitt;
- FIG 4: eine geschnittene Schrägansicht einer beanspruchten Windenergieanlage;
- FIG 5: eine schematischen Aufbau einer beanspruchten Industrieanwendung.

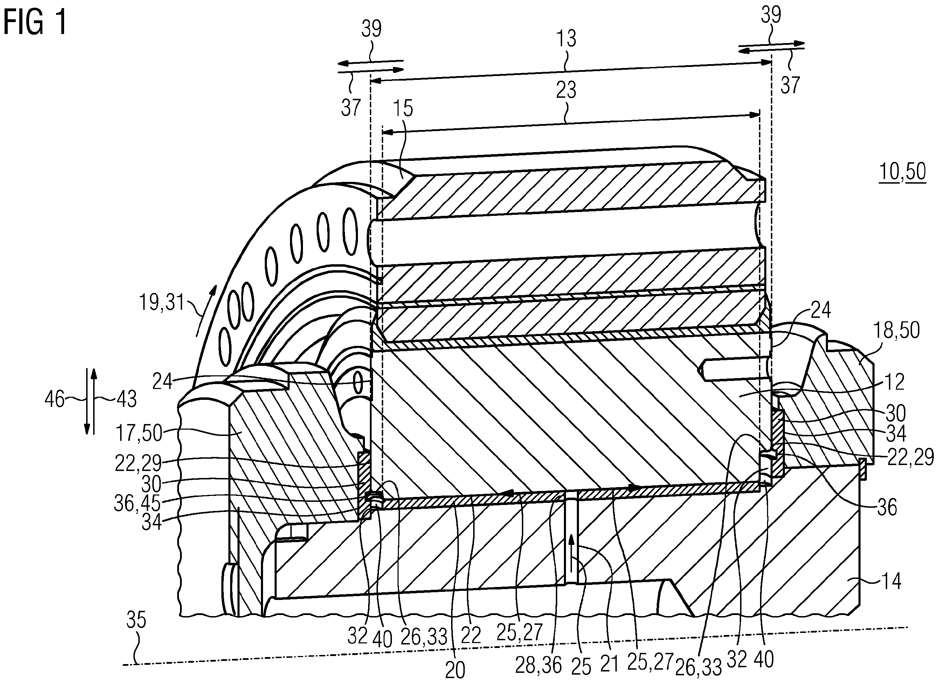

FIG 1 zeigt schematisch eine Ausführungsform eines Gleitlagersystems 10, das in einem nicht näher dargestellten Planetengetriebe 50 einsetzbar ist. Das Gleitlagersystem 10 umfasst ein Planetenrad 12, das drehbar um eine Planetenraddrehachse 35 auf einer Planetenradachse 14 angeordnet ist. Das Planetenrad 14 weist ferner eine Verzahnung 15 auf. Die Planetenradachse 14 weist eine Bohrung 21 auf, die dazu ausgebildet ist, einen Schmierstoff 25 in eine radial äußere Richtung 43 zu fördern. Die Begriffe radial innen und radial außen sind dabei auf eine Planetenraddrehachse 35 bezogen und im Sinne der Pfeile 43, 46 in FIG 1 zu verstehen. Auf der Planetenradachse 14 ist eine Radialgleitlagerbuchse 20 angeordnet, die gegenüber der Planetenradachse 14 drehfest ist. Die Radialgleitlagerbuchse verfügt über eine Buchsenbohrung 28, die hydraulisch mit einer nicht näher dargestellten umlaufenden Schmierstoffnut 36 verbunden ist. Ferner ist die Radialgleitlagerbuchse 20 dazu ausgebildet, dass der Schmierstoff 25 zwischen die Radialgleitlagerbuchse und das Planetenrad 12 tritt und dadurch einen ersten Schmierstoffspalt 27 ausbildet. Der Schmierstoff 25 bildet dabei im ersten Schmierstoffspalt 27 im Wesentlichen eine Schmierfläche 22, die die Radialgleitlagerbuchse 20 im Wesentlichen zylindermantelförmig umgibt. Des Weiteren erfolgt im ersten Schmierstoffspalt 27 auch ein Fluss des Schmierstoffs 25 in eine axial äußere Richtung 39. Im Sinne von FIG 1 ist eine axial äußere Richtung durch die Pfeile 39 und entsprechend eine axial innere Richtung durch die Pfeile 37 dargestellt. Die Planetenradachse 20 ist ferner zwischen einer ersten und einer zweiten Planetenträgerwange 17, 18 aufgenommen und ist gegenüber den Planetenträgerwangen 17, 18 selbst drehfest. Dabei gehören die Planetenträgerwangen 17, 18 zu einem nicht näher dargestellten Planetenträger 50.

Im Bereich einer Nabe 26 weist das Planetenrad 14 an seinen Stirnflächen 24 eine axiale Ausnehmung 33 auf, wobei die Radialgleitlagerbuchse 20 im Wesentlichen bündig an der axialen Ausnehmung 33 anliegt. Dadurch weist die Radialgleitlagerbuchse 20, und folglich auf die Schmierfläche 22 im ersten Schmierstoffspalt 27, eine axiale Länge 23 auf, die geringer ist als eine axiale Länge 13 des Planetenrads 12. Das Planetenrad 12 überragt die Radialgleitlagerbuchse 20 somit axial beidseitig. Darüber hinaus ist an den Stirnflächen 24 des Planetenrads 12 jeweils eine Axialgleitlagerscheibe 30 angeordnet. Die Axialgleitlagerscheiben 30 liegen jeweils mit einer axial äußeren Fläche 34 an den Planetenträgerwangen 17, 18 an und weisen eine Verdrehsicherung auf. Dadurch sind die Axialgleitlagerscheiben 40 gegenüber der Planetenradachse 14 drehfest ausgebildet. Damit wird jeweils an den axialen Enden des Planetenrads 12 durch die Ausnehmung 33 an der Nabe 26 des Planetenrads 12, die Radialgleitlagerbuchse 20, die Planetenradachse 12 und die Axialgleitlagerscheibe 30 ein Schmierstoffraum 40 begrenzt, der entlang einer Umlaufrichtung 31 im Wesentlichen ringförmig ausgebildet ist. Schmierstoff 25, der aus dem ersten Schmierstoffspalt 27 austritt, sammelt sich im Betrieb des Gleitlagersystems 10, also bei einer Drehbewegung 19 des Planetenrads 12 um die Planetenraddrehachse 35, im Schmierstoffraum 40. Ausgehend vom Schmierstoffraum 40 erfolgt eine weitere Förderung des Schmierstoffs 25 in einen zweiten Schmierstoffspalt 29. Der zweite Schmierstoffspalt 29 liegt jeweils an den axialen Enden des Planetenrads 12 vor, zwischen der Stirnfläche 24 des Planetenrads 12 und der entsprechenden Axialgleitlagerscheibe 30. Innerhalb des zweiten Schmierstoffspalts 29 wird jeweils Schmierstoff 25 in eine radial äußere Richtung 43 gefördert und so zwischen der Axialgleitlagerscheibe 40 und der Stirnfläche 24 des Planetenrads 12 eine Schmierfläche 22 ausgebildet.

Ferner weist jede der Axialgleitlagerscheiben 30 an einer axial innenliegenden Stirnseite 32, die dem Schmierstoffraum 40 zugewandt ist und diesen mit begrenzt, eine umlaufende Schmierstoffnut 36 auf, die dazu ausgebildet ist, also Beruhigungsraum für dort aufgenommenen Schmierstoff 25 zu dienen. Ferner dient die Schmierstoffnut 36 dazu, weitere nicht dargestellte Radialnuten mit Schmierstoff 25 zu versorgen.

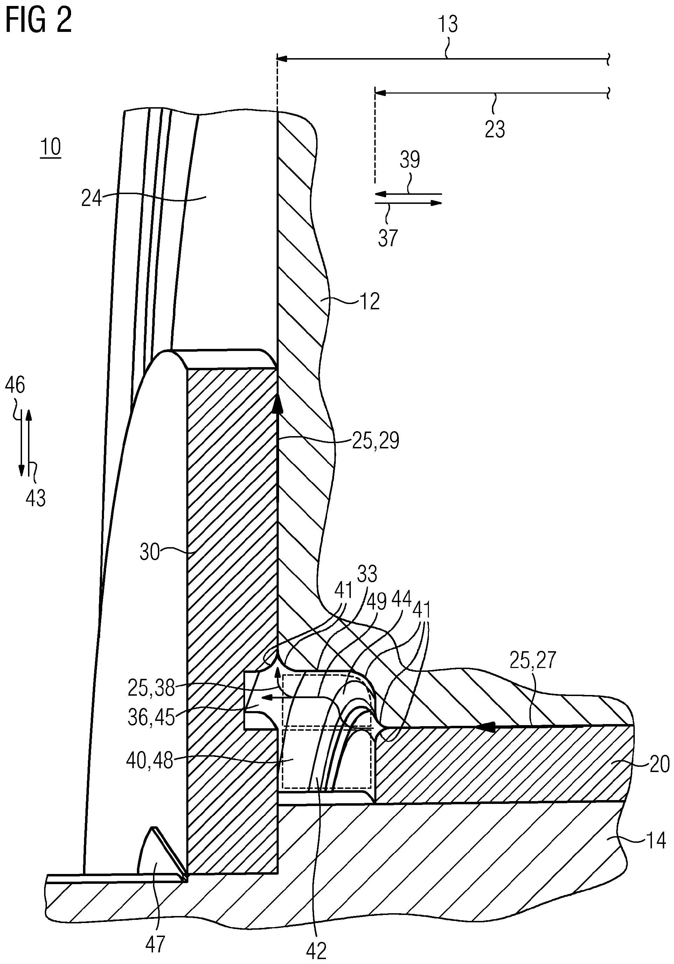

In FIG 2 ist eine Detailansicht des Gleitlagersystems 10 gemäß FIG 1 dargestellt. Das Gleitlagersystem 10 umfasst ein Planetenrad 12, das auf einer Planetenradachse 14 drehbar aufgenommen ist. Zwischen dem Planetenrad 12 und der Planetenradachse 14 ist eine Radialgleitlagerbuchse 20 angeordnet, die drehfest auf der Planetenradachse 14 angebracht ist. Zwischen dem Planetenrad 12 und der Radialgleitlagerbuchse 20 ist ein erster Schmierstoffspalt 27 ausgebildet, durch den ein Schmierstoff 25 gefördert wird. Ferner ist an einer Stirnfläche 24 des Planetenrads 12 eine Axialgleitlagerscheibe 40 angeordnet, die mittels einer Verdrehsicherung gegenüber der Planetenradachse 14 drehfest ausgebildet ist. Die Verdrehsicherung wird dabei mittels einer Profilabflachung 47 an der Planetenradachse 14 und der Axialgleitlagerscheibe 40 gewährleistet. Ferner weist die Radialgleitlagerbuchse 20, und damit der erste Schmierstoffspalt 27, eine axiale Länge 23 auf, die geringer ist als die axiale Länge 13 des Planetenrads 14. Dadurch wird die Radialgleitlagerbuchse 20 vom Planetenrad 14 axial überragt und es wird ein Schmierstoffraum 40 definiert, der im Wesentlichen durch das Planetenrad 12, die Radialgleitlagerbuchse 20, die Planetenradachse 14 und die Axialgleitlagerscheibe 40 begrenzt ist. Der Schmierstoffraum 40 ist dabei umlaufend, also im Wesentlichen ringförmig, ausgebildet.

Der Schmierstoffraum 40 ist in eine Mehrzahl an Bereichen gegliedert. Der Schmierstoffraum 40 umfasst einen radial innenliegenden Teilraum 42, der im Wesentlichen durch die Planetenradachse 14, die Radialgleitlagerbuchse 40 und einen Abschnitt der Axialgleitlagerscheibe 40 begrenzt wird. In einer radial äußeren Richtung 43 schließt sich dem radial innenliegenden Teilraum 42 ein radial außenliegender Teilraum 44 an. Der radial außenliegende Teilraum 44 wiederum ist im Wesentlichen in radial äußere Richtung 43 und in eine axial innere Richtung 37 durch das Planetenrad 12 begrenzt, das im Bereich des radial äußeren Teilraums 44 eine axiale Ausnehmung 33 aufweist. Durch die axiale Ausnehmung 33 ergibt sich im Wesentlichen eine Stufenform, die den äußeren Teilraum 44 radial nach außen und axial nach innen begrenzt. An den radial äußeren Teilraum 44 schließt sich ein Beruhigungsraum 45 an, der durch eine Schmierstoffnut 36 gebildet ist. Die Schmierstoffnut 36 ist dabei an einer axial innenliegenden Stirnseite 32 der Axialgleitlagerscheibe 40 ausgebildet.

Schmierstoff 25, der durch den ersten Schmierstoffspalt 27 gefördert wird, erreicht und füllt den Schmierstoffraum 40 im bestimmungsgemäßen Betrieb zumindest teilweise mit Schmierstoff 25, so dass ein hydraulischer Druck im Schmierstoffraum 40 vorliegt. Im bestimmungsgemäßen Betrieb ist der Schmierstoffraum 40 vollständig mit Schmierstoff 25 gefüllt.

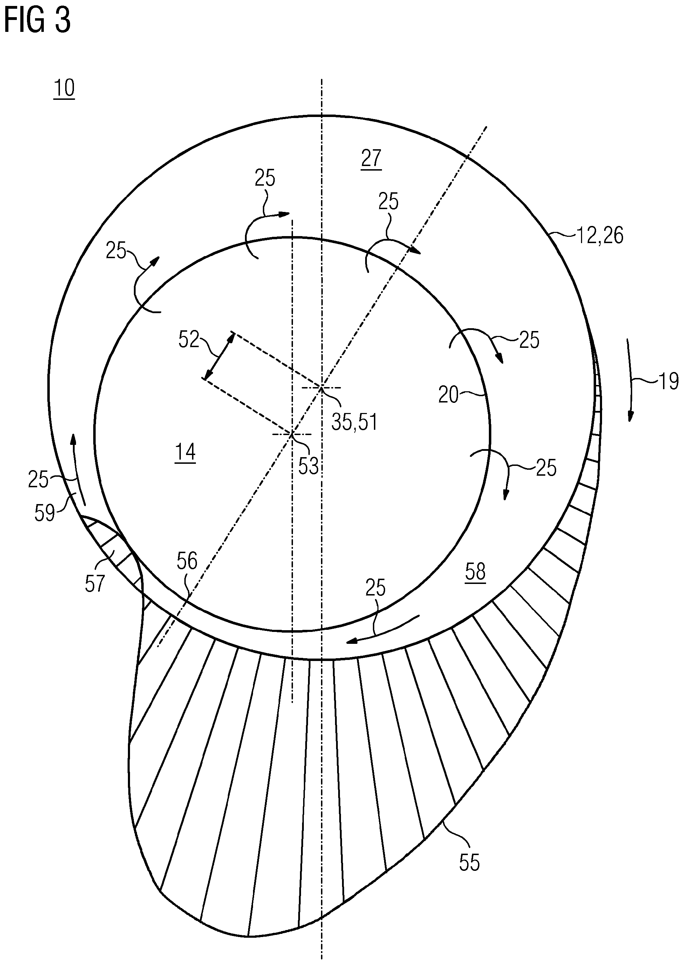

Schmierstoff 25, der sich im radial innenliegenden Teilraum 42 befindet, ist mit der Axialgleitlagerscheibe 30, der Planetenradachse 14 und der Gleitlagerbuche 20 von nicht drehenden, also stationären, Wandungen begrenzt. Im radial innenliegenden Teilraum 42 ist der hydraulische Druck 48 vorrangig und wird höchstens in vernachlässigbarer Größenordnung von einem dynamischen Druck 49 beeinflusst, der durch eine Drehbewegung 19 des Planetenrads 12 hervorrufbar ist. Infolge des hydraulischen Drucks 48 im radial innenliegenden Teilraum 42 erfolgt eine Schmierstoffversorgung eines divergenten Schmierspalts 59, wie beispielsweise in FIG 3 skizziert, in vorteilhafter Weise über Schmierstoff 25 aus dem radial innenliegenden Teilraum 42.

Schmierstoff 25 im radial äußeren Teilraum 44 wiederum liegt im Bereich der axialen Ausnehmung 44 am Planetenrad 12 an, das im bestimmungsgemäßen Betrieb eine Drehbewegung 19 vollführt. Dadurch wird eine Strömung hervorgerufen, durch die der Schmierstoff 25 im radial äußeren Teilraum 44 entlang einer Umfangsrichtung, also der Drehbewegung 19 folgend, beschleunigt wird. Darüber hinaus erfolgt im radial äußeren Teilraum 44 eine Umlenkung 38 des Schmierstoffs 25, die den Schmierstoff 25 in den Beruhigungsraum 45 und zu einem zweiten Schmierstoffspalt 29 lenkt. Der Beruhigungsraum 45 ist durch seine Form als Schmierstoffnut 36 auf drei Seiten von einer stationären Wandung, also der Axialgleitlagescheibe 30 selbst begrenzt und dient damit einem Druckausgleich entlang einer Umfangsrichtung, also entlang der Drehbewegung 19. Darüber hinaus wird der zweite Schmierstoffspalt 29 durch Schmierstoff 25 aus dem Beruhigungsraum 45 und dem radial äußeren Teilraum 44 gespeist. Über den zweiten Schmierstoffspalt 29 wiederum, der zwischen einer Stirnfläche 24 den Planetenrads 14 und der Axialgleitlagerscheibe 30 liegt, werden nicht näher dargestellte Radialnuten mit Schmierstoff 25 versorgt. Dadurch liegt eine im gesamten Gleitlagersystem 10 zuverlässige Versorgung mit Schmierstoff 25 vor. Insbesondere wird durch das Zusammenwirken des radial innenliegenden Teilraums 42, des radial außenliegenden Teilraums 44 und des Beruhigungsraum 45 verhindert, dass durch die Drehbewegung 19 des Planetenrads 12 entsprechend starke Umlenkungen 38 des Schmierstoffs 25 stattfinden, so dass eine Unterversorgung des divergenten Schmierspalts 59 eintreten kann. Ferner ist die Axialgleitlagerscheibe 30 axial beweglich auf der Planetenradachse 14 angeordnet. Infolgedessen ergibt sich eine axiale Position der Axialgleitlagerscheibe 30 aus den Druckverhältnissen, die sich aus dem hydraulischen Druck 48 und der Drehbewegung 19 des Planetenrads 12 am zweiten Schmierstoffspalt 29 einstellen. Die axiale Positionierung der Axialgleitlagerscheibe 30 erfolgt damit im Betrieb selbsttätig und erfordert keine aufwendigen Montageschritte bei der Herstellung des Gleitlagersystems 10. Darüber hinaus verfügen die Radialgleitlagerbuchse 20, das Planetenrad 12 und die Axialgleitlagerscheibe 30 an den Eintritten bzw. Austritten des ersten und zweiten Schmierstoffspalts 27, 29 über Verrundungen 41, die ein störungsarmes Fließen des Schmierstoffs 25 erlauben. Ferner ist das Planetenrad 12 im Bereich der axialen Ausnehmung 33 mit entsprechenden Verrundungen 41 ausgebildet. Dadurch werden konvergente bzw. divergente Eintritte und Austritte für den Schmierstoff 25 bereitgestellt, an denen eine laminare Strömung des Schmierstoffs 25 begünstigt wird. Einem Umschlag von laminarer in turbulente Strömung wird dadurch entgegengewirkt. Darüber hinaus wird durch die Verrundung 41, die in einem axial inneren und radial äußeren Bereich der axialen Ausnehmung 33 in der Nabe 26 des Planetenrad 12 ausgebildet ist, ein Massenstrom an Schmierstoff 25 eingestellt, der dem zweiten Schmierstoffspalt 29 zugeführt wird. Je größer der Radius der Verrundung 41 in axial inneren und radial äußeren Bereich der axialen Ausnehmung 33 ist, umso mehr Schmierstoff 25 wird dem zweiten Schmierstoffspalt 29 zugeführt. Dementsprechend ist ein Massenstrom an Schmierstoff 25, der zu einer Versorgung des divergenten Schmierspalts 59 gemäß FIG 3 bereitgestellt wird, reduziert. Insgesamt wird ferner durch den Schmierstoffraum 40, der in einen Beruhigungsraum 45, einen radial inneren und einen radial äußeren Teilraum 42, 44 gegliedert ist, wird eine druckmindernde Wirkung eines erhöhten Stroms an Schmierstoff 25 im zweiten Schmierstoffspalt 29 reduziert. Vorzugsweise ist auch eine zumindest vorübergehende Entkopplung zwischen der Strömung an Schmierstoff 25 im zweiten Schmierstoffspalt 29 und dem Druck im Schmierstoffraum 40 erzielbar. Dadurch wird die Schmierstoffversorgung, insbesondere an einem divergenten Schmierstoffspalt 59, verbessert.

In FIG 3 ist schematisch ein Gleitlagersystem 10 im Querschnitt abgebildet. Die Ebene des Querschnitts in FIG 3 ist dabei, bezogen auf FIG 1 in einem axial inneren Bereich des Gleitlagersystems 10. Das Gleitlagersystem 10 umfasst eine Planetenradachse 14, auf der eine Radialgleitlagerbuchse 20 drehfest angeordnet ist. Die Radialgleitlagerbuchse 20 ist von einem Planetenrad 12 umgeben. Die Planetenradachse 14 mit der Radialgleitlagerbuchse 20 ist dabei in einer Nabe 26 des Planetenrads 12 exzentrisch aufgenommen. Es liegt eine Exzentrizität 52 zwischen einem Planetenradmittelpunkt 51 und einem Drehachsenmittelpunkt 53 vor. Die Planetenraddrehachse 35 gemäß FIG 1 und FIG 2 verläuft dabei durch den Planetenradmittelpunkt 51. An der Oberfläche der Radialgleitlagerbuchse 25 tritt Schmierstoff 25 aus und wird durch eine Drehbewegung des Planetenrads 12 in einen Bereich eines konvergenten Schmierspalts 58 gefördert. Im Bereich des konvergenten Schmierspalts 58 nimmt entlang einer Strömungsrichtung des Schmierstoffs 25 ein Abstand zwischen der Radialgleitlagerbuchse 20 und dem Planetenrad 12 ab. Ferner nimmt ein Tragdruck 55 im Bereich des konvergenten Schmierspalts 58 zu. Der konvergente Schmierspalt 58 geht stromab einer Strömungsrichtung des Schmierstoffs 25 ab einer Engstelle 56 in einen divergenten Schmierspalt 59 über. Der konvergente Schmierspalt 58 und der divergente Schmierspalt 59 bilden Abschnitte eines ersten Schmierstoffspalts 27, der zwischen dem Planetenrad 12 und der Radialgleitlagerbuchse 20 vorliegt. Im Bereich des divergenten Schmierspalts 59 liegt zumindest in einem Abschnitt ein Unterdruck 57 vor. Die Druckverhältnisse aus dem Tragdruck 55 und dem Unterdruck 57 sind unter anderem von der Geschwindigkeit der Drehbewegung 19 des Planetenrads 12 abhängig. Durch einen Schmierstoffraum 40 im Bereich eines axialen Endes der Radialgleitlagerbuchse 20, wie beispielsweise in FIG 1 und FIG 2 skizziert, wird die Schmierstoffversorgung des divergenten Schmierspalts 59 verbessert. Dadurch ist der Einsatz von zusätzlichen Schmiertaschen in der Radialgleitlagerbuchse 20 im Bereich des divergenten Schmierspalts 59 entbehrlich. Auch einer Erhöhung eines Förderdrucks des Schmierstoffs 25 ist entbehrlich um die Schmierstoffversorgung im Gleitlagersystem 10 zu verbessern.

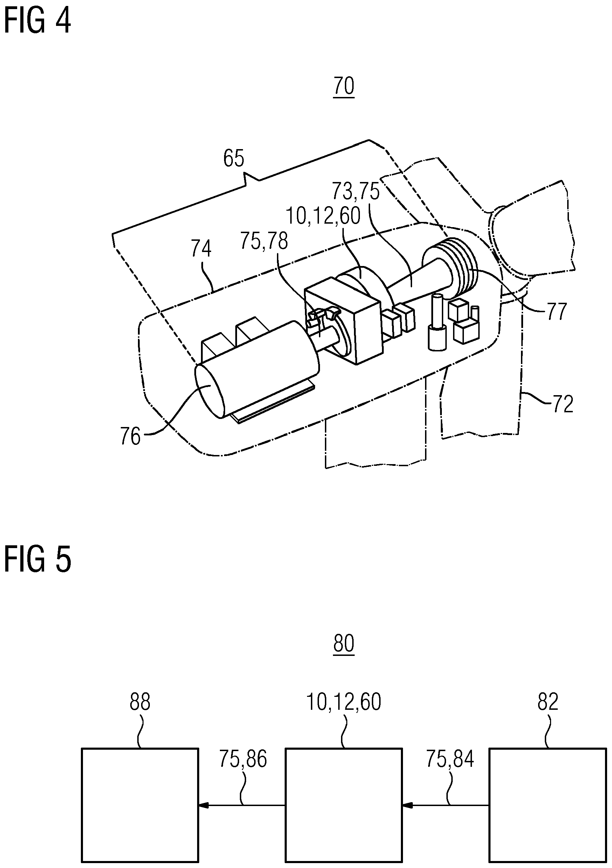

In FIG 4 ist schematisch eine Windenergieanlage 70 abgebildet, die eine Gondel 74 umfasst, an der drehbar ein Rotor 72 angebracht ist. Der Rotor 72 ist an einer Rotornabe 77 mit der Gondel 74 verbunden und mit einer Rotorwelle 73 gekoppelt, die dazu ausgebildet ist, Wellenleistung 75 vom Rotor 72 in ein Planetengetriebe 60 zu übertragen. Die Wellenleistung 75 wird vom Planetengetriebe 60 über eine Generatorwelle 78 auf einen Generator 76 übertragen. Die Wellenleistung 75 wird durch den Generator 76 in Elektrizität umgewandelt. Die Rotornabe 77, die Rotorwelle 73, das Planetengetriebe 60, die Generatorwelle 78 und der Generator 76 wirken im Betrieb zusammen und gehören zu einem Antriebsstrang 65 der Windenergieanlage 70. Im Planetengetriebe 60 ist zumindest ein Gleitlagersystem 10 gemäß einer der skizzierten Ausführungsformen eingebaut und dient darin zur Lagerung drehender Komponenten des Planetengetriebes 60, beispielsweise der drehbaren Lagerung eines nicht näher dargestellten Planetenrads 12.

FIG 5 zeigt schematisch den Aufbau einer Industrieanwendung 80, die über einen Antrieb 82 verfügt, der beispielsweise als Elektromotor ausgebildet ist. Der Antrieb 82 ist mit einem Planetengetriebe 60 gekoppelt, an das Wellenleistung 75 übertragen wird. Die Übertragung der Wellenleistung 75 erfolgt über eine Eingangswelle 84 des Planetengetriebes 60. Die Wellenleistung 75 wird wiederum über eine Ausgangswelle 86 des Planetengetriebes 60 an eine mechanische Anwendung 88 weitergeleitet. Die mechanische Anwendung 88 ist beispielsweise als Mühle, Vertikalmühle, Extruder, Gesteinsbrecher oder Förderanlage ausgebildet. Das Planetengetriebe 60 umfasst zumindest ein Gleitlagersystem 10 gemäß einer der oben beschriebenen Ausführungsformen.

## Patentansprüche

1. Gleitlagersystem (10), umfassend ein Planetenrad (12), das drehbar auf einer Planetenradachse (14) aufgenommen ist, und an der Planetenradachse (14) eine Radialgleitlagerbuchse (20) angeordnet ist, **dadurch gekennzeichnet, dass** zwischen der Radialgleitlagerbuchse (20) und dem Planetenrad (12) eine Schmierfläche (22) ausgebildet ist, die eine geringere axiale Länge (23) aufweist als das Planetenrad (12).

2. Gleitlagersystem (10) nach Anspruch 1, **dadurch gekennzeichnet**, das Gleitlagersystem (10) eine Axialgleitlagerscheibe (30) aufweist, die auf der Planetenradachse (14) angeordnet ist.

3. Gleitlagersystem (10) nach Anspruch 2, **dadurch gekennzeichnet, dass** die Axialgleitlagerscheibe (30) an einer axial innenliegenden Stirnseite (32) eine Schmierstoffnut (36) aufweist, die hydraulisch mit einem Schmierstoffraum (40) im Bereich der Radialgleitlagerbuchse (20) verbunden ist.

4. Gleitlagersystem (10) nach einem der Ansprüche 1 bis 3, **dadurch gekennzeichnet, dass** das Planetenrad (12) im Bereich einer Nabe (26) eine axiale Ausnehmung (33) aufweist, die zur Umlenkung (38) eines Schmierstoffs (25) von einem ersten Schmierstoffspalt (27) an der Radialgleitlagerbuchse (20) zu einem zweiten Schmierstoffspalt (29) an der Axialgleitlagerscheibe (30) ausgebildet ist.

5. Gleitlagersystem (10) nach einem der Ansprüche 1 bis 4, **dadurch gekennzeichnet, dass** an der Radialgleitlagerbuchse (20), der Axialgleitlagerscheibe (30), und/oder dem Planetenrad (12) im Bereich des ersten und/oder zweiten Schmierspalts (27, 29) eine Verrundung (41) ausgebildet sind.

6. Gleitlagersystem (10) nach einem der Ansprüche 1 bis 5, **dadurch gekennzeichnet, dass** eine Verrundung (41) in einem axial inneren und radial äußeren Bereich der axialen Ausnehmung (33) am Planetenrad (12) zu einem Einstellen eines Massenstroms von Schmierstoff (25) zum zweiten Schmierstoffspalt (29) ausgebildet ist.

7. Gleitlagersystem (10) nach einem der Ansprüche 3 bis 6, **dadurch gekennzeichnet, dass** die Schmierstoffnut (36) an der Axialgleitlagerscheibe (30) als Beruhigungsraum (45) für den Schmierstoff (25) ausgebildet ist.

8. Gleitlagersystem (10) nach einem der Ansprüche 3 bis 7, **dadurch gekennzeichnet, dass** der Schmierstoffraum (40) einen radial innenliegenden Teilraum (42) umfasst, der zur Versorgung eines divergenten Schmierspalts (59) an der Radialgleitlagerbuchse (20) mit Schmierstoff (25), und zumindest teilweise von der Planetenradachse (14), der Radialgleitlagerbuchse (20) und der Axialgleitlagerscheibe (30) begrenzt ist.

9. Gleitlagersystem (10) nach einem der Ansprüche 3 bis 8, **dadurch gekennzeichnet, dass** die Axialgleitlagerscheibe (30) schwimmend auf der Planetenradachse (14) angeordnet ist.

10. Gleitlagersystem (10) nach einem der Ansprüche 1 bis 9, **dadurch gekennzeichnet, dass** in der Planetenradachse (14) mindestens ein Schmierstoffkanal (21) zur Versorgung der Schmierfläche (22) mit Schmierstoff (25) ausgebildet ist.

11. Gleitlagersystem (10) nach einem der Ansprüche 1 bis 10, **dadurch gekennzeichnet, dass** die Planetenradachse (14) drehfest in einem Planetenträger (50) aufgenommen ist.

12. Planetengetriebe (60), umfassend zumindest eine Planetenstufe, die einen Planetenträger (50) mit einer Mehrzahl an Planetenrädern (12) aufweist, die in einem Hohlrad drehbar angeordnet sind und mit einer Sonnenwelle gekoppelt sind, **dadurch gekennzeichnet, dass** mindestens eines der Planetenräder (12) mittels eines Gleitlagersystems (10) nach einem der Ansprüche 1 bis 11 drehbar im Planetenträger (50) gelagert ist.

13. Antriebsstrang (65) für eine Windenergieanlage (70), umfassend eine Rotorwelle (73), die mit einem Planetengetriebe (60) drehmomentübertragend verbunden ist, und einen Generator (76), der drehmomentübertragend mit dem Planetengetriebe (60) verbunden ist, **dadurch gekennzeichnet, dass** das Planetengetriebe (60) nach Anspruch 12 ausgebildet ist.

14. Windenergieanlage (70), umfassend einen Rotor (72), der drehbar an einer Gondel (74) angebracht ist und zur Erzeugung von Elektrizität mit einem Antriebsstrang (65) nach Anspruch 13 verbunden ist.

15. Industrieanwendung (70), umfassend eine mechanische Anwendung (88) und einen Antriebsmotor (82), die über ein Planetengetriebe (60) drehmomentübertragend miteinander verbunden sind, **dadurch gekennzeichnet, dass** das Planetengetriebe (60) nach Anspruch 12 ausgebildet ist.
